(19) Europäisches Patentamt
European Patent Office
Office européen des brevets

(11) **EP 1 993 217 B1**

(12) **EUROPEAN PATENT SPECIFICATION**

(45) Date of publication and mention
of the grant of the patent:
**14.08.2013   Bulletin 2013/33**

(51) Int Cl.:
*H04B 7/08* (2006.01)          *H04L 1/06* (2006.01)
*H04L 25/06* (2006.01)

(21) Application number: **07108291.1**

(22) Date of filing: **15.05.2007**

(54) **OFDM receiver and digital signal processor**

OFDM-Empfänger und digitaler Signalprozessor

Récepteur OFDM et processeur de signal numérique

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**19.11.2008   Bulletin 2008/47**

(73) Proprietor: **Abilis Systems Sarl**
**1228 Plan-Les-Ouates (CH)**

(72) Inventors:
 • **Mathys, Yves**
   **1233 Bernex (CH)**
 • **Butussi, Mateo**
   **1218 Grand-Saconnex (CH)**
 • **Lattuada, Mauro**
   **1007 Lausanne (CH)**
 • **Ruppert, Christian Alexander**
   **1012 Geneve (CH)**

(74) Representative: **P&TS SA (AG, Ltd.)**
**Av. J.-J. Rousseau 4**
**P.O. Box 2848**
**2001 Neuchâtel (CH)**

(56) References cited:
**WO-A-2007/034415      US-A1- 2006 062 322
US-A1- 2006 291 599      US-B1- 6 792 258**

**Description**

Field of the invention

The subject technology relates generally to wireless communications systems and methods, and more particularly to systems and methods that enhance performance by exploiting multiple receiving antennas in a spaced-apart relationship.

Description of related art

In a wireless communication system, an RF modulated signal from a transmitter may reach a receiver via several paths having different and time-variable transit time and attenuation. Recombination in the receiver of RF signals pertaining to different paths may give rise to constructive or destructive interference, and to degradation of the reception, known as multipath.

Multipath degradation is particularly deleterious to mobile applications. In this case, when the receiver is moving relative to the transmitter and to the environment, the multipath degradation is also time-variable, and the quality of reception can be wildly erratic.

To mitigate the deleterious multipath effect, a diversity scheme adopting multiple spaced antennas may be used. In this scheme, the fading at different antennas is different. When the different data fluxes, all representative of the same signal source, are combined in the receptor, it is possible to obtain a better reconstruction of the original data. OFDM and COFDM wireless networks, in particular, suffer from multipath degradation, and an effective antenna diversity scheme can be useful to mitigate multipath in these network.

Diversity schemes can however be useful in other contexts than multipath immunity in a wireless network. In a wired network, for example, a frequency diversity scheme may be used, according to which the same data is transmitted, as a sequence of digital bits, via different channels, having different carrier frequencies. The separate channels can be recombined in the receiver in order to acquire superior noise immunity, for example. Other diversity schemes exist, for example based on difference of transmission path, polarization, and other.

Several algorithms are known to recombine data fluxes relative to separate channels in a diversity scheme. A straightforward option is to choose the channel exhibiting, at any given time, the best signal quality, or define a threshold above which a signal can be used.

Other known methods consider the quality of reception for all the available channels, for example as expressed by a S/N ratio, and generate a weighted combination of signals, using signal quality as weight.

Example of such combination techniques are provided, among others, by international patent applications WO2007038694 and WO2003069802. Another example is provided by US7039137. US2006/0291599 discloses a communication system employing at least two receivers to increase link availability by site diversity .

Brief summary of the invention

Know processing method in this technical domain do not use all the available information in an optimum way or, on the other hand, are complex and expensive to realize in term of hardware resources. There is therefore a need for an improved combination method in digital networks adopting an antenna diversity scheme. It is a goal of the present invention to provide a processing method and system, which is simpler and more effective than known methods.

This and other goals of the invention are provided by the object of the appended claims.

Brief Description of the Drawings

The invention will be better understood with the aid of the description of an embodiment given by way of example and illustrated by the figures, in which:

Figure 1 represents a receiver with a plurality of antennas of known type.

Figure 2 represents schematically the functional blocks of an OFDM receiver according to one aspect of the invention.

Figure 3 represents schematically a receiver according to one embodiment of the present invention.

Detailed description of modes of realization of the invention

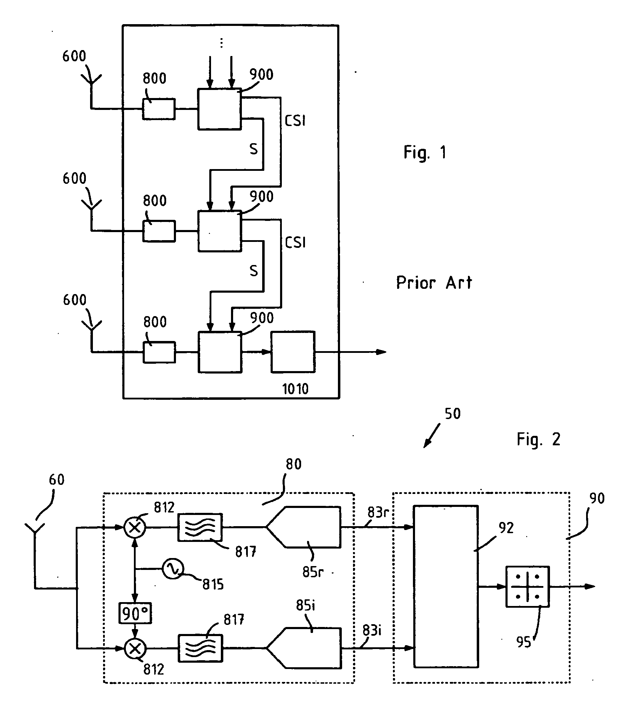

Figure 1 represents a known receiver implementing an antenna diversity scheme. In this device each antenna 600 is connected to a tuner 800 and to a demodulating unit 900. Demodulated signals 5 from each channel are combined, taking into account the channel state information CSI. The compound signal so obtained is fed to a demapper 1010, to be processed as it is known in the art.

Figure 2 represents, in a highly simplified schematic form, a high frequency and demodulation module 50 of an OFDM receiver suitable for the realization of the invention. The module 50 comprises a receiving antenna 60, connected to a tuner section 80. The antenna 60 is adapted to receive a radio signal relative to a digital wireless network. It must be understood, however, that the invention, even if it will be described in the following, by way of example, with reference to a multi-antenna receiver in a OFDM network, can be adapted to other digital modulation formats in wireless or wired network, and can be used also in other form of diversity schemes, like frequency diversity, polarization diversity and so on.

According to the particular standard and modulation scheme in use, the RF signal will be modulated by a stream of digital modulation symbols, for example predetermined combination of amplitude and phase in a standardised modulation alphabet. Each symbol representing a sequence of digital bits in a transmitted bit sequence, which contains, in plain form or encoded in any suitable format, a data content that the receiver aims to reconstruct.

Preferably, but not exclusively, the radio signal is an OFDM or COFDM signal, in which the bit sequence is multiplexed over a number of different frequencies. Such modulation schemes are used in known wireless broadcast network, like a DAB or DVB signal, or in wireless telecommunication network, like WiFi or WiMAX. According to a preferred variant of the invention, the receiver is a programmable receiver, adaptable to a plurality of modulation standard, as the need arises.

Tuner section 80 comprises, for example, a quadrature carrier-stripping stage, comprising the mixers 812, the local carrier oscillator 815 and the filters 817, to process the RF signal received via the antenna 60, and to provide orthogonal digital signals 83r, 83i at the output of ADC 85r, 85i. According to the present example, the tuner 80 mixes the radio signal with two local carriers which have a fixed phase shift of 90°, and provides both an in-phase 83r component and a quadraphase component 83i of the digital signal. Other modulation schemes are however possible in the frame of the invention, as it is known in the art.

A demodulation/demapping section 90 is employed to determine a sequence of likelihood ratios of the individual bits in the transmitted bit sequence. In the presented example this is accomplished by the FFT demodulator 92 and by a demapper 95. In the presented example, relative to an OFDM receiver, the demapper receives from the FFT demodulator a series of received symbols, represented as complex vectors. The demapper 95 determines the *a posteriori* likelihood that each of the transmitted bits has a determined value, given the received symbol or, preferably, determines the likelihood ratio

$$LLR_i = \log \frac{P(b_i = 1 \mid r)}{P(b_i = 0 \mid r)}$$

where $P(b_i = 1 \mid r$ represents the likelihood, that the *i-th* transmitted bit has value 1, given that the demapper 95 has received the symbol r or the observation *r.*

In the absence of noise, and under ideal propagation conditions, the transmitted symbol stream, and hence the transmitted bit sequence, could be perfectly estimated with one single antenna and pertaining receiving module. However, as discussed in the introduction, noise and multipath limit the reliability of the estimation.

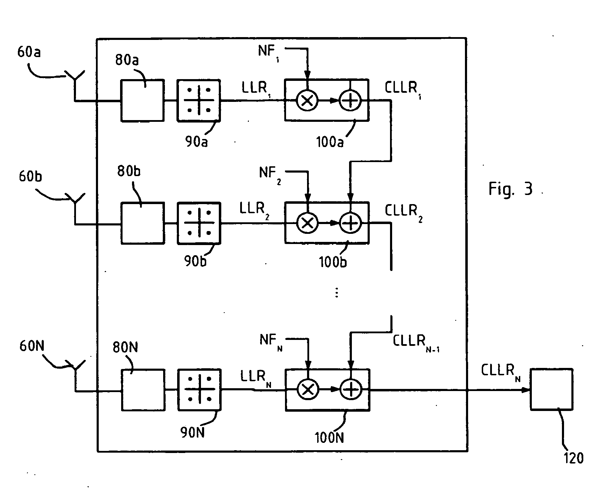

As represented schematically in figure 3, the receiver of the invention includes a plurality of antennas 60a, 60b, ..., 60N, each connected with a tuner 80a, 80b, ..., 80N and a demapper 90a, 90b, ..., 90N to retrieve each received bit of one estimated transmitted bit sequence. In the presented example, the demodulators are not represented, for sake of simplicity. They could be realized as separate units, or combined in a single piece of hardware or software with the respective demappers 90a, 90b, ..., 90N.

If a maximization of the *a posteriori* probability is sought, the estimated bit sequence b is equal to

$$\hat{b} = \arg\max_{b} P(b \mid r)$$

where r is the received sequence of symbols. In the case of multiple antennas this criterion leads to the evaluation of:

$$\hat{b} = \arg\max_b P\left(b \mid r_1, r_2, \ldots r_N\right)$$

where $r_1, \ldots r_n$ are independent observations of the received signal. This can be rewritten as:

$$\hat{b} = \arg\max_b P(b) P\left(r_1, r_2, \ldots r_N \mid b\right)$$
$$= \arg\max_b P(b) \left\{ P(r_1 \mid b) P(r_2 \mid b) \ldots P(r_N \mid b) \right\}$$

The Log Likelihood ratio of the estimation of $\hat{b}_i$ of the symbol i can be expressed as:

$$LLR(\hat{b}_i) = \log \frac{P\left(b_i = 1 \mid r_{i,1}, r_{i,2}, \ldots r_{i,N}\right)}{P\left(b_i = 0 \mid r_{i,1}, r_{i,2}, \ldots r_{i,N}\right)}$$

applying the Bayes rule and assuming that the transmitted symbols are equally distributed this expression is equivalent to:

$$LLR(\hat{b}_i) = \log \frac{P\left(r_{i,1}, r_{i,2}, \ldots r_{i,N} \mid b_i = 1\right)}{P\left(r_{i,1}, r_{i,2}, \ldots r_{i,N} \mid b_i = 0\right)}$$

Assuming that the received symbol observations are independent, we obtain:

$$LLR(\hat{b}_i) = \log \frac{P(r_{i,1} \mid b_i = 1) P(r_{i,2} \mid b_i = 1), \ldots P(r_{i,N} \mid b_i = 1)}{P(r_{i,1} \mid b_i = 0) P(r_{i,2} \mid b_i = 0), \ldots P(r_{i,N} \mid b_i = 0)}$$
$$= \log \frac{P(r_{i,1} \mid b_i = 1)}{P(r_{i,1} \mid b_i = 0)} + \log \frac{P(r_{i,2} \mid b_i = 1)}{P(r_{i,2} \mid b_i = 0)} + \log \frac{P(r_{i,N} \mid b_i = 1)}{P(r_{i,N} \mid b_i = 0)}$$
$$= LLR(\hat{b}_{i,1}) + LLR(\hat{b}_{i,2}) + LLR(\hat{b}_{i,N})$$

It is therefore possible to combine the log likelihood ratios $LLR(\hat{b}_{i,1})$, $LLR(\hat{b}_{i,2})$, and so on, provided by the individual receivers of the antennas, into a combined log likelihood ratio combining all the information of individual receivers. The choice of a logarithmic representation, even if it is not an essential feature of the invention, is advantageous, as the combination reduces to a simple addition.

Referring now again to figure 3, the receiver of the invention comprises, for each antenna, tuner and demodulator, a likelihood processor 100a, 100b, 100N, combining the internal likelihood ratio, i.e. the log likelihood ratio provided from his own demapper 90a, 90b, 90N, in the demodulator/demapping stage, with the external log likelihood ratio coming from the previous channel. In a preferred realization, schematized in figure 3, the internal log likelihood ratio $LLR_n$ is multiplied by a normalization factor $NF_n$ and added with the log likelihood ratio provided by the previous channel. According to this example, the receiver of figure 3 has a cascade structure, all the channels being connected in a series, and the last channel provides the combined log likelihood ratio $CLLR_N$.

The normalization factor is chose according to the number of active channel in the system and, in a simple implementation, can be statically defined. According to a variant, the normalization factor NF is dependent from the channel state information. In this way, for example, an unhealthy channel can be given lower weight than other channels. According to another variant, the weights can be statically defined, but not have the same value for all the channels, for example they may reflect differences among antennas having different sizes and gains.

The sequence of combined log likelihood ratios represents, in optimal way, the sequence of transmitted bits and allows the reconstruction of the transmitted information which is encoded, at the transmitter's end, in the sequence of transmitted bits. The invention can be adapted to a variety of channel encoding schemes, as foreseen by different OFDM modulation standard. The transmitted information is usually also encoded together with some error correction information, and can be retrieved, for example, by a Viterbi decoder 120, optionally combined with Reed-Solomon error correction, or by a turbo decoder, a LDPCC stage or other decoders, as dictated by the modulation format.

According to another embodiment of the invention, a combination of likelihood is performed on likelihood of transmitted *symbols,* provided by demapper 95 instead than of transmitted *bits.* As there is a known one-to-one correspondence between symbol likelihood and bit likelihood, this is equivalent to the previous embodiment. In this variant of the invention, however, likelihood ratios are less effective than in the above embodiment as, in general, the modulation alphabet comprises more than two symbols.

A receiver according to this second embodiment of the invention may be organized as represented in figure 3, with the demappers 90a, 90b, ..., 90N providing likelihoods of transmitted symbols instead of transmitted bits. The combination method according to this embodiment comprises a step of combining symbol likelihoods relative to each channel to a combined symbol likelihood, for example by the chain of likelihood processors 100a, 100b, ..., 100N arranged to provide a combined sum of log-likelihood of symbols on individual channels. Decoding, in decoder 120, proceeds similarly as in the above embodiment.

**Claims**

1. A data processing method in a receiver of a digital network, comprising:

   receiving, on a plurality of channels, one signal modulated by a stream of digital modulation symbols, each symbol representing, according to a predefined modulation alphabet, a sequence of digital bits in a transmitted bit sequence, encoding a transmitted information;
   demodulating the output of each channel individually to obtain a plurality of likelihood ratio sequences ($LLR_1$, $LLR_2$, $LLR_N$) of the digital bits in the transmitted bit sequence;

   **characterized by**
   combining the likelihood ratio sequences ($LLR_1$, $LLR_2$, $LLR_N$) in a plurality of processors (100a, 100b, 100N) connected in a series, each processor being arranged to multiply one of said likelihood ratio sequences ($LLR_1$, $LLR_2$, $LLR_N$) by a normalization factor ($NF_1$, $NF_2$, $NF_N$) dependent from a channel state information, and to combine the result with the combined likelihood ratio sequence ($CLLR_1$, $CLLR_2$) coming from the previous processor in the series, wherein the last processor ($100_N$) in the series provides a combined likelihood ratio sequence relative to the plurality of channels ($CLLR_N$);
   retrieving said transmitted information based on said combined ratio sequence.

2. The data processing method of the previous claim, wherein said combining step comprises a computation of a sum of logarithm of said likelihood ratios.

3. The data processing method of any of the previous claims, wherein said digital network is a wireless network with OFDM or COFDM.

4. The data processing method of any of the previous claims, wherein the step of retrieving said data comprises a step comprising a further error-correction step, a Viterbi decoding step, a LDPCC decoding step or a turbo decoding step.

5. The data processing method of any of the previous claims, wherein said network is a radio broadcast network, for example a DVB network.

6. A data processing device for a receiver of a digital network, comprising:

   a plurality of receiving units (80a, 80b, 80N), arranged to receive one signal modulated by a stream of digital modulation symbols, each symbol representing, according to a predefined modulation alphabet, a sequence of digital bits in a transmitted bit sequence, encoding a transmitted information;
   a plurality of demapper units (95, 90a, 90b, 90N) receiving the output of each receiving unit (80a, 80b, 80N) individually to obtain a plurality of likelihood ratio sequences ($LLR_1$, $LLR_2$, $LLR_N$) of the digital bits in the transmitted bit sequence;

**characterized by**
a plurality of likelihood processors (100a, 100b, 100N) connected in a series, each processor being arranged to multiply one of said likelihood ratio sequences ($LLR_1$, $LLR_2$, $LLR_N$) by a normalization factor ($NF_1$, $NF_2$, $NF_N$) dependent from a channel state information, and to combine the result with the combined likelihood ratio sequence ($CLLR_1$, $CLLR_2$) coming from the previous processor in the series, wherein the last processor in the series ($100_N$) provides a combined likelihood ratio sequence relative to the plurality of channels ($CLLR_N$)

7. The data processing device of claim 6, further comprising a decoder (120), arranged to retrieve said transmitted information based on said combined likelihood ratio sequence ($CLLR_N$).

8. The data processing device of claim 6, wherein said plurality of receiving units correspond to a plurality of receiving antennas (60a, 60b, 60N).


**Patentansprüche**

1. Ein Datenverarbeitungsverfahren in einem Empfänger eines digitalen Netzwerks, aufweisend:

   Empfangen eines Signals, das durch einen Fluss von digitalen Modulationssymbolen moduliert ist, in einer Mehrzahl von Kanälen, wobei jedes Symbol entsprechend einem vordefinierten Modulationsalphabet eine Sequenz von digitalen Bits in einer übertragenen Bitsequenz repräsentiert, wobei die Sequenz von digitalen Bits eine übertragene Information kodiert;
   Demodulieren der Ausgabe eines jeden Kanals individuell, so dass eine Mehrzahl von Likelihoodverhältnissequenzen ($LLR_1$, $LLR_2$, $LLR_N$) der digitalen Bits in der übertragenen Bitsequenz erhalten wird;

   **gekennzeichnet durch**
   Kombinieren der Likelihoodverhältnissequenzen ($LLR_1$, $LLR_2$, $LLR_N$) in einer Mehrzahl von seriell verbundener Prozessoren (100a, 100b, 100N), wobei jeder Prozessor ausgebildet ist, eine der Likelihoodverhältnissequenzen ($LLR_1$, $LLR_2$, $LLR_N$) mit einem von einer Kanalzustandsinformation abhängigen Normalisierungsfaktor ($NF_1$, $NF_2$, $NF_N$) zu multiplizieren, und das Ergebnis mit den kombinierten Likelihoodverhältnissequenzen ($CLLR_1$, $CLLR_2$) von den vorherigen seriell verbundenen Prozessoren zu kombinieren, wobei der letzte Prozessor ($100_N$) in der Serie eine kombinierte Likelihoodverhältnissequenz relativ zu der Mehrzahl der Kanäle ($CLLR_N$) liefert;
   Bestimmen der übertragenen Information auf der Basis der kombinierten Verhältnissequenz.

2. Das Datenverarbeitungsverfahren des vorherigen Anspruchs, wobei der Schritt des Kombinierens das Berechnen einer Summe der Logarithmen der Likelihoodverhältnisse aufweist.

3. Das Datenverarbeitungsverfahren nach einem der vorherigen Ansprüche, wobei das digitale Netzwerk ein drahtloses Netzwerk mit OFDM oder COFDM ist.

4. Das Datenverarbeitungsverfahren nach einem der vorherigen Ansprüche, wobei der Schritt des Bestimmens der Daten eine Schritt aufweist, der einen weiteren Fehlerkorrekturschritt aufweist, einen Viterbi-Dekodierschritt, einen LDPCC-Dekodierschritt oder einen Turbodekodierschritt aufweist..

5. Das Datenverarbeitungsverfahren nach einem der vorherigen Ansprüche, wobei das Netzwerk ein Radiorundfunknetzwerk, z.B. ein DVB Netzwerk ist.

6. Eine Datenverarbeitungsvorrichtung für einen Empfänger eines digitalen Netzwerks, aufweisend:

   Eine Mehrzahl von Empfängereinheiten (80a, 80b, 80N), ausgebildet zum Empfangen eines Signals, das durch einen Fluss von digitalen Modulationssymbolen moduliert ist, wobei jedes Symbol entsprechend einem vordefinierten Modulationsalphabet eine Sequenz von digitalen Bits in einer übertragenen Bitsequenz repräsentiert, wobei die Sequenz von digitalen Bits eine übertragene Information kodiert;
   Eine Mehrzahl von Rückabbildeeinheiten (95, 90a, 90b, 90N), die die Ausgabe jeder Empfangseinheit (80a, 80b, 80N) individuell erhalten, um eine Mehrzahl von Likelihoodverhältnissequenzen ($LLR_1$, $LLR_2$, $LLR_N$) der digitalen Bits in der übertragenen Bitsequenz zu erhalten;

**gekennzeichnet durch**
eine Mehrzahl von in Serie verbundener Likelihoodprozessoren (100a, 100b, 100N), wobei jeder Prozessor ausgebildet ist, eine der Likelihoodverhältnissequenzen ($LLR_1$, $LLR_2$, $LLR_N$) mit einem von einer Kanalzustandsinformation abhängigen Normalisierungsfaktor ($NF_1$, $NF_2$, $NF_N$) zu multiplizieren, und das Ergebnis mit den kombinierten Likelihoodverhältnissequenzen ($CLLR_1$, $CLLR_2$) von den vorherigen seriell verbundenen Prozessoren zu kombinieren, wobei der letzte Prozessor ($100_N$) in der Serie eine kombinierte Likelihoodverhältnissequenz relativ zu der Mehrzahl der Kanäle ($CLLR_N$) liefert.

7. Die Datenverarbeitungsvorrichtung nach Anspruch 6, weiter aufweisend einen Dekodierer (120) ausgebildet die übertragene Information auf der Basis der kombinierten Likelihoodverhältnissequenz ($CLLR_N$) zu bestimmen.

8. Die Datenverarbeitungsvorrichtung nach Anspruch 6, wobei die Mehrzahl von Empfangseinheiten einer Mehrzahl von Empfangsantennen (60a, 60b, 60N) entspricht.

## Revendications

1. Une méthode de traitement des données dans un récepteur d'un réseau numérique, comprenant:

   la réception sur plusieurs canaux d'un signal modulé par un flux de symboles de modulation numérique, chaque symbole représentant, selon un alphabet de modulation prédéfini, une séquence de bits numériques dans une séquence de bits transmise, encodant une information transmise;
   la démodulation de la sortie de chaque canal individuellement pour obtenir plusieurs séquences de rapports de vraisemblance ($LLR_1$, $LLR_2$, $LLR_N$) des bits numériques dans la séquence de bits transmise;

   **caractérisée par**
   la combinaison des séquences de rapports de vraisemblance ($LLR_1$, $LLR_2$, $LLR_N$) dans plusieurs processeurs (100a, 100b, 100N) connectés en série, chaque processeur étant agencé pour multiplier une desdites séquences de rapports de vraisemblance ($LLR_1$, $LLR_2$, $LLR_N$) par un facteur de normalisation ($NF_1$, $NF_2$, $NF_N$) dépendant d'une information d'état de canal et pour combiner le résultat avec la séquence rapports de vraisemblance combinée ($CLLR_1$, $CLLR_2$) provenant du processeur précédent dans les séries, selon laquelle le dernier processeur ($100_N$) dans les séries fournit une séquence rapports de vraisemblance combinée relative aux différents canaux ($CLLR_N$); l'identification de ladite information transmise basée sur ladite séquence ration combinée.

2. La méthode de traitement des données selon la revendication précédente, selon laquelle ladite étape de combinaison comprend le calcul d'une somme de logarithmes desdits rapports de vraisemblance.

3. La méthode de traitement des données selon l'une des revendications précédentes, selon laquelle ledit réseau numérique est un réseau sans fil avec OFDM ou COFDM.

4. La méthode de traitement des données selon l'une des revendications précédentes, selon laquelle l'étape d'identification desdites informations comprend une étape comprenant une étape supplémentaire de correction d'erreur, une étape de décodage Viterbi, une étape de décodage LDPCC ou une étape de décodage turbo.

5. La méthode de traitement des données selon l'une des revendications précédentes, selon laquelle ledit réseau est un réseau radio, par exemple un réseau DVB.

6. Un dispositif de traitement des données pour un récepteur d'un réseau numérique, comprenant:

   plusieurs unités de réception (80a, 80b, 80N), agencées pour recevoir un signal modulé par un flux de symboles de modulation numérique, chaque symbole représentant, selon un alphabet de modulation défini, une séquence de bits numériques dans une séquence de bits transmise, encodant une information transmise;
   plusieurs unités démappeur (95, 90a, 90b, 90N) recevant la sortie de chaque unité de réception (80a, 80b, 80N) individuellement, pour obtenir plusieurs séquences de rapports de vraisemblance ($LLR_1$, $LLR_2$, $LLR_N$) des bits numériques dans la séquence bit transmise;

   **caractérisé par**
   plusieurs processeurs de 'likelihood' (100a, 100b, 100N) connectés en série, chaque processeur étant agencé pour multiplier une desdites séquences de rapports de vraisemblance ($LLR_1$, $LLR_2$, $LLR_N$) par un facteur de normalisation ($NF_1$, $NF_2$, $NF_N$) dépendant d'une information d'état de canal et pour combiner le résultat avec la séquence de rapports de vraisemblance combinée ($CLLR_1$, $CLLR_2$) provenant du processeur précédent dans les séries, selon laquelle le dernier processeur dans les séries ($100_N$) fournit une séquence de rapports de vraisemblance combinée relative aux différents canaux ($CLLR_N$).

7. Le dispositif de traitement des données selon la revendication 6, comprenant en outre un décodeur (120) agencé pour identifier ladite information transmise basée sur ladite séquence de rapports de vraisemblance combinée ($CLLR_N$).

8. Le dispositif de traitement des données selon la revendication 6, selon lequel ladite pluralité d'unités de réception correspond à une pluralité d'antennes de réception (60a, 60b, 60N).

Fig. 1

Prior Art

Fig. 2

Fig. 3

**EP 1 993 217 B1**

**REFERENCES CITED IN THE DESCRIPTION**

**Patent documents cited in the description**

- WO 2007038694 A
- WO 2003069802 A
- US 7039137 B
- US 20060291599 A